# EUROPÄISCHE PATENTANMELDUNG

(11) **EP 1 040 989 A2**
(43) Veröffentlichungstag der Anmeldung: **04.10.2000**
(21) Anmeldenummer: 00106150.6
(22) Anmeldetag: 21.03.2000
(51) Int. Cl.: B62J 9/00, B62J 7/04

(54) **Gepäckhalterung für Fahrzeuge**

(30) Priorität: 30.03.1999 DE 29905798 U; 01.09.1999 DE 29915298 U
(71) Anmelder: Umarex Sportwaffen GmbH & Co. KG, 59757 Arnsberg (DE)
(72) Erfinder: Bross, Michael, 75172 Pforzheim (DE)
(74) Vertreter: Fritz, Edmund Lothar, Dipl.-Chem.

(57) **Zusammenfassung**

Es wird eine Gepäckhalterung für Fahrzeuge, insbesondere für Fahrräder, mit einer Einrichtung zur lösbaren Befestigung einer Trageeinheit (8, 13) für Gepäckstücke (21) vorgeschlagen, die in einem unter dem Fahrzeugsitz (15) am Fahrzeug befestigbaren Träger (2) einsetzbar ist. Gemäß einer ersten Ausführungsform weist der Träger (2) eine Verriegelungseinrichtung (4, 5, 6) auf, die ein in den Träger (2) rückseitig einsetzbares Verbindungselement (8) aufnimmt und verriegelt, welches mit der Trageeinheit (7; 13) verbunden ist, und der Träger (2) ist an seinem freien rückwärtigen Ende mit einer positiven Stützstufe (2.1) ist, die mit einer zugewandten Stützstufe (7.1; 13.1) der Trageeinheit (7; 13) korrespondiert. Gemäß einer zweiten Ausführungsform ist der Träger (2) mit einer Verriegelungseinrichtung (6, 22) für die rückseitig in den Träger (2) einsetzbare Aufnahmeeinheit (8, 13) versehen, die aus zwei sich unter einem Winkel kreuzende Bolzen, Stifte oder dergleichen (6, 22) gebildet ist, die im Träger (2) gehalten sind und zwischen sich im Kreuzungsbereich die Aufnahmeeinheit (8, 13) verriegelbar aufnehmen.

## Beschreibung

Die vorliegende Erfindung betrifft eine Gepäckhalterung für Fahrzeuge, insbesondere für Fahrräder mit und ohne Hilfsmotor, Fahrräder mit zwei oder mehr Rädern, Tandems, etc., zur lösbaren Befestigung einer Trageeinheit, nach dem Oberbegriff des Patentanspruchs 1 bzw. 7.

Gepäckhalterungen der gattungsgemäßen Art sind an sich bekannt.

Die US-A-4,643,343 offenbart eine Gepäcktragevorrichtung, die mittels eines aus einem Flachmaterial hergestellten Halters unter dem Sattel des Fahrrades angebracht wird. Von Nachteil bei dieser Gepäcktragevorrichtung ist es, daß sich ein Gepäckteil leicht lösen kann. Ferner sind seitlich keine ausreichenden Führungen vorgesehen.

Aus der DE 94 90 262 U1 ist eine Gepäckhalterung für Sättel bei Fahrrädern bekannt, die aus einem Befestigungsteil für ein Gepäckbehältnis gebildet ist und einen unter dem Sattel des Fahrrades befestigten Längsträger aufweist. Der Längsträger ist mit einer rohrförmigen Aufnahmeeinrichtung versehen, in die das Befestigungsteil einsteckbar ist. Der Längsträger ist an den Sattelfedern und einem Befestigungsknopf der Sattelstütze befestigt. Die gesamte Einrichtung ist technisch aufwendig, erscheint labil und erlaubt kein einfaches und schnelles Anbringen der Gepäckhalterung.

Weiter offenbart die EP 0 717 693 Bl eine Gepäckhalterung für Sättel von Fahrrädern, die ein das Gepäckbehältnis haltendes Befestigungsteil aufweist. An der Unterseite des Sattels des Fahrrades ist ein Längsträger befestigt, in dessen rückwärtige Aufnahme das Befestigungsteil eingeführt ist. Der in Fahrtrichtung nach unten geneigte Längsträger ist im hinteren Bereich an einer Sattelfeder fest angebracht und zusätzlich mit seinem vorderen Endbereich unter oder hinter dem Befestigungskopf der Sattelstütze befestigt. Auf diese Weise wird eine gute Befestigung des Längsträgers erzielt, wobei der Befestigungskopf der Sattelstütze als Gegenlager dient. Dadurch und durch die nach unten geneigte Position des Längsträgers können auch relativ schwere Gepäckbehältnisse transportiert werden. Die Gepäckhalterung ist dennoch technisch aufwendig und nur für den geübten Benutzer sachgerecht am Sattel zu befestigen. Hinzu kommt noch als weiterer Nachteil, daß die Gepäckhalterung an bestimmte Sattelkonstruktionen gebunden ist.

Ferner ist aus dem US-Patent Nr. 4,566,617 eine Gepäckhalterung mit einem Sattelbausatz für Fahrräder bekannt, bei dem die Satteltasche im wesentlichen unter dem Sattel angebracht ist. Die Befestigung des Gepäckstückes erfolgt durch das gabelförmige Befestigungs- oder Trageteil, das einerseits unter dem Sattel befestigt wird und andererseits mit seinen seitlich beabstandeten Schenkeln das Gepäckstück hält.

Ausgehend von dem vorgenannten Stand der Technik ist es eine Aufgabe der Erfindung, eine Gepäckhalterung der eingangs genannten Art zu schaffen, die unabhängig von der Sattelkonstruktion einfach und sicher am Fahrzeug montierbar und demontierbar ist.

Gemäß einem ersten Aspekt der vorliegenden Erfindung wird diese Aufgabe durch eine Gepäckhalterung mit den Merkmalen des Patentanspruchs 1 gelöst. Vorteilhafte Weiterbildungen und Ausgestaltungen dieser Gepäckhalterung sind in den Unteransprüchen 2 bis 6 beschrieben.

Mit der erfindungsgemäßen Gepäckhalterung lassen sich beliebige Gepäckstücke leicht und sicher aufnehmen. Eine solche Gepäckhalterung ist mit einfachen Mittel aufgebaut, läßt sich mit wenigen Handgriffen austauschen und ist nach der Montage durch eine Verriegelungseinrichtung gesichert. Aufgrund der technisch sinnvollen Gestaltung der eingesetzten Stützstufen können auch große Lasten problemlos transportiert werden. Die Verriegelungseinrichtung ist dergestalt in die Grundeinheit integriert, daß ein umbeabsichtigtes Lösen der jeweiligen austauschbaren Trageeinheit verhindert ist.

Das Befestigen der Trageeinheit und der Grundeinheit erfolgt unabhängig von der jeweiligen Sattelposition. Von besonderem Vorteil sind bei dieser Gepäckhalterung die positiv und korrespondierend negativ ausgebildeten Stützstufen der ineinander zu schiebenden Bauteile von Trageeinheit und Grundeinheit bzw. Träger.

Gemäß einem zweiten Aspekt der vorliegenden Erfindung wird die oben genannte Aufgabe durch eine Gepäckhalterung mit den Merkmalen des Patentanspruchs 7 gelöst. Vorteilhafte Weiterbildungen und Ausgestaltungen dieser Gepäckhalterung sind in den Unteransprüchen 8 bis 14 beschrieben.

Diese erfindungsgemäße Gepäckhalterung ist denkbar einfach aufgebaut und demzufolge leicht zu montieren und zu demontieren. Um das Gepäckbehältnis aufnehmen zu können, wird ein Träger durch Schnellverschluß an der Sattelstütze des Fahrzeuges in an sich bekannter Weise befestigt. In diesen schnell und sicher angebrachten Träger ist von der offenen Rückseite her ein Verbindungselement als Träger für das Gepäckbehältnis eingeführt. Das Verbindungselement ist nun in dem Träger denkbar einfach durch zwei sich kreuzende Bolzen oder Stifte gehalten. Diese Anordnung der Bolzen oder Stifte ist so vorgesehen, daß das Verbindungselement zwischen den zwei sich kreuzenden Bolzen oder Stifte verriegelt ist. Das Verbindungselement ist auf diese Weise weder in der Längsrichtung noch in der Höhe oder zu den Seiten hin bewegbar.

Die Erfindung wird nachfolgend anhand verschiedener bevorzugter Ausführungsbeispiele unter Bezugnahme auf die beiliegenden Zeichnungen näher beschrieben. Darin zeigen:
- Figur 1: ein erstes Ausführungsbeispiel der Grundeinheit der Gepäckhalterung gemäß der Erfindung, die an einem Fahrrad angebracht ist, in Seitenansicht;
- Figur 2: eine Seitenansicht der Grundeinheit von Figur 1 mit angefügter Trageeinheit, teilweise im Schnitt;
- Figur 3: eine Aufsicht auf die Gepäckhalterung nach den Figuren 1 und 2, teilweise im Schnitt;
- Figur 3A: die Trageeinheit im Schnitt nach der Linie IV - IV in Figur 3;
- Figur 4: die Trageeinheit von Figur 2 mit aufgesetztem flachen Tragteil in perspektivischer Ansicht;
- Figur 5: die Trageeinheit nach Figur 2 in perspektivischer Ansicht;
- Figur 6: ein zweites Ausführungsbeispiel einer Gepäckhalterung gemäß der vorliegenden Erfindung in Aufsicht;
- Figur 7: ein drittes Ausführungsbeispiel einer Gepäckhalterung gemäß der vorliegenden Erfindung in Seitenansicht;
- Figur 8: eine vergrößerte Schnittdarstellung der Gepäckhalterung von Figur 7 nach der Linie II - II in Figur 7;
- Figur 9: eine perspektivische Ansicht der Gepäckhalterung von Figur 7; und
- Figur 10: eine perspektivische Ansicht eines Gepäckbehältnisses mit angedeuteter Gepäckhalterung.

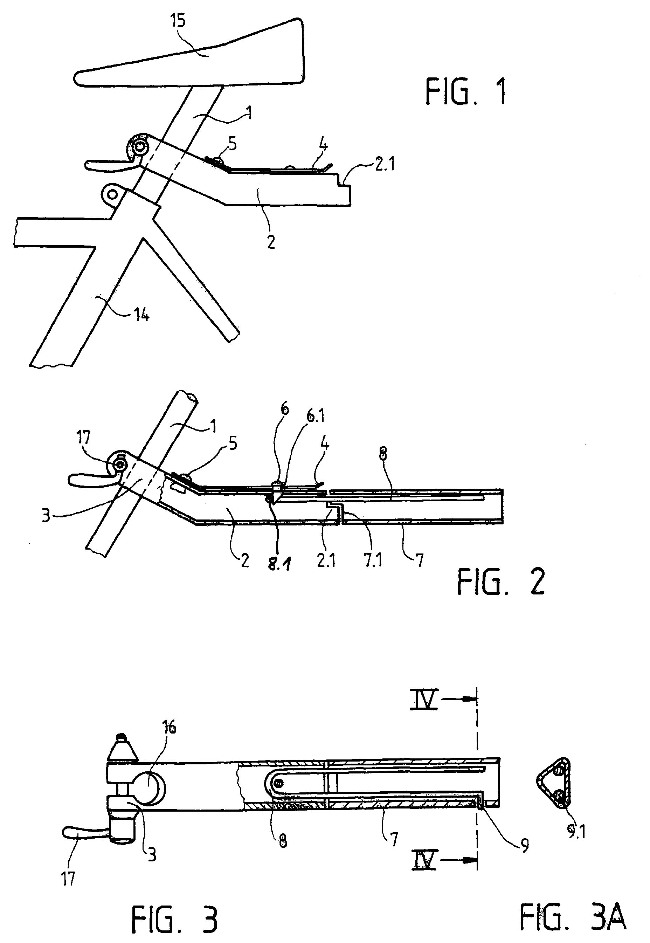

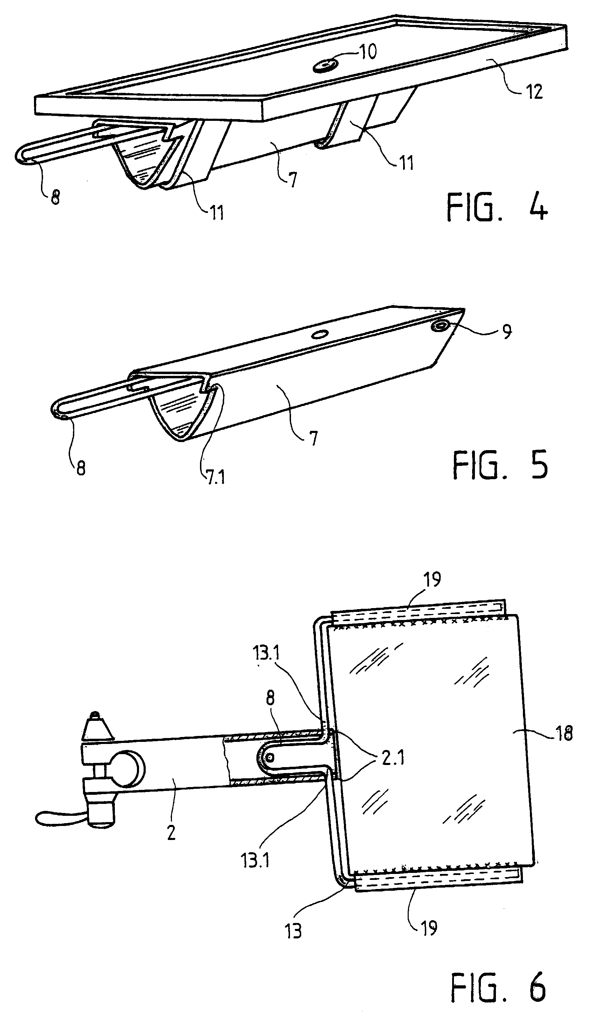

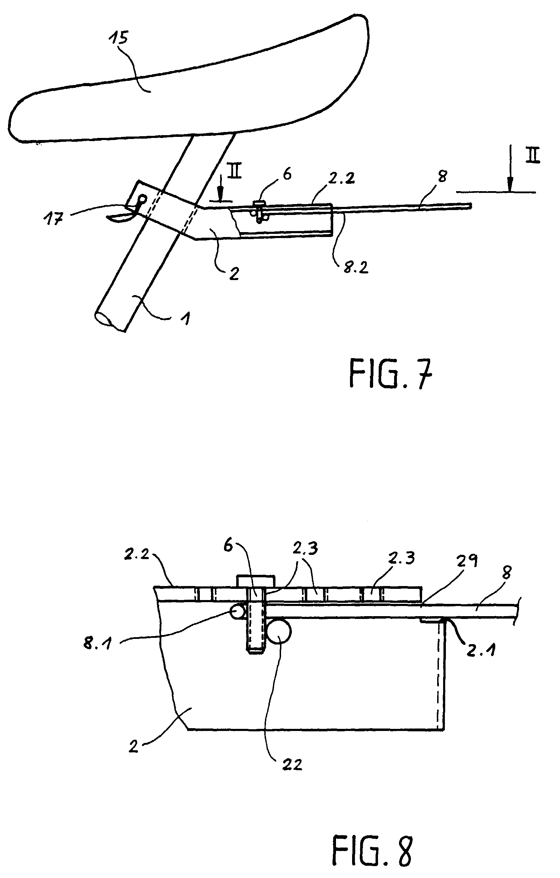

Anhand der Figuren 1 bis 5 wird zunächst ein erstes bevorzugtes Ausführungsbeispiel der erfindungsgemäßen Gepäckhalterung beschrieben. Die Beschreibung eines zweiten und dritten Ausführungsbeispieles der erfindungsgemäßen Gepäckhalterung erfolgt anschließend anhand von Figur 6 bzw. von Figuren 7 bis 10.

Die erfindungsgemäße Gepäckhalterung ist zur lösbaren Befestigung einer Aufnahmeeinrichtung für Gepäckstücke an Fahrzeugen ausgebildet. Als Fahrzeuge kommen dabei insbesondere Fahrräder mit und ohne Hilfsmotor, Fahrräder mit zwei oder mehr Rädern, Tandems, etc. in Betracht, bei denen die Gepäckhalterung unterhalb des Fahrzeugsitzes bzw. Sattels angebracht werden kann. Wesentlich für die Anbringung der neuen Gepäckhalterung ist das Vorhandensein einer Sattelstütze oder eines anderen geeigneten Halteelementes am Fahrzeug.

In Figur 1 ist eine Sattelstütze 1 bzw. ein Sattelrohr eines Fahrrades dargestellt, die in den Rahmen 14 in an sich bekannter Weise höhenverstellbar eingesetzt und festgeklemmt ist. Die Sattelstütze 1 trägt einen Sattel 15. An der Sattelstütze 1 ist ein Träger 2 als Grundeinheit der Gepäckhalterung befestigt. Die Befestigung erfolgt in einfacher Ausführung durch eine geschlitzte Spannhülse 3 mit einer erweiterten Öffnung 16, durch die die Sattelstütze 1 geführt ist, und durch Festklemmen mittels einer Spannschraube 17. Der Träger 2 ist als Profilrohr ausgebildet und im wesentlichen rechtwinklig an der Sattelstütze 1 angebracht und verläuft deshalb zunächst unter einem Winkel zur Horizontalen. In geringem Abstand nach der Sattelstütze 1 ist der Träger in die horizontale Ebene abgewinkelt.

Auf der Oberseite 2.2 des Trägers 2 ist eine Blattfeder 4 durch einen Blindniet 5 befestigt, die bis in den Endbereich des Trägers 2 geführt ist. In die Blattfeder 4 ist eine Bohrung 6.1 eingebracht, in die ein Verriegelungsbolzen 6 einsteckbar ist. Aus Figur 2 geht hervor, daß der Verriegelungsbolzen 6 ein abgeschrägtes oder konisches Endstück aufweist, wobei die Schräge dem rückwärtigen Bereich des Trägers 2 zugewandt ist.

Von Bedeutung bei dem Träger 2 ist die positive Stützstufe 2.1 an seinem Stirnende. Diese positive Stützstufe 2.1 korrespondiert mit einer entsprechenden negativen Stützstufe 7.1 am vorderen Stirnende der Trageeinheit 7. Die Trageeinheit 7 und der Träger 2 sind über die beiden einander zugewandten Stützstufen 2.1 und 7.1 gemäß Figur 2 zusammengepasst und bilden so die Gepäckhalterung.

In der kastenförmigen Trageeinheit 7 aus Profilrohr entsprechend dem Träger 2 ist ein Verbindungselement 8 eingesetzt, das im wesentlichen U-förmig gestaltet ist und aus einem Runddraht, Rundbolzen, Profilbolzen oder Rohr besteht. Der vordere U-Steg 8.1 umgreift im zusammengebauten Zustand den Verriegelungsbolzen 6. Da der Verriegelungsbolzen 6 eine Schräge aufweist und unter der Kraft der Blattfeder 4 steht, kann das Verbindungselement 8 zusammen mit der Trageeinheit 7 von der Rückseite in den Träger 2 eingeschoben werden. Dabei wird der Verriegelungsbolzen 6 hochgedrückt und schnappt mit Federkraft wieder zurück. Dadurch ist das Verbindungselement 8 mit der Trageeinheit gegen unbeabsichtigtes Herausfallen gesichert. Diese Sicherung wird dadurch ergänzt, daß ein U-Schenkel des Verbindungselements 8 an seinem rückwärtigen freien Ende einen unter 90° abgewinkelten Zapfen 9 besitzt, der in eine Bohrung 9.1 der Trageeinheit 7 hineinragt, wie dies aus den Figuren 3 und 5 deutlich zu erkennen ist.

Aus Figur 5 geht ferner der bevorzugte dreieckförmige Querschnitt der Trageeinheit 7 hervor. Selbstverständlich sind auch andere Bauformen für die Trageeinheit 7 möglich. Die gezeigte Bauform hat sich als besonders stabil auch unter Belastung erwiesen.

Die Bauart der Trageeinheit 7 mit eingesetztem Verbindungselement 8 und der wichtigen vorderen negativen Stützstufe 7.1 zeigt deutlich Figur 5 in perspektivischer Ansicht.

Figur 4 offenbart die Trageeinheit 7 ebenfalls in perspektivischer Ansicht mit einem aufgesetzten Flachgepäckträger 12, der durch zwei um die Trageeinheit 7 umlaufende Haltestege 11 gehalten ist. Eine Längsverschiebung des Flachgepäckträgers 12 wird durch einen Blindniet 10 oder eine Schraube oder dergleichen verhindert, die durch den Flachgepäckträger 12 und den Haltesteg 11 in die Oberseite der Trageeinheit 7 hineinragt. Mit dem Flachgepäckträger 12 können beliebige und vor allem auch großvolumige Gepäckstücke transportiert werden, die zusätzlich noch mit einfachen mechanischen Mitteln (Bänder, Riemen oder dergleichen) gehalten werden können.

Ein zweites bevorzugtes Ausführungsbeispiel der Gepäckhalterung gemäß der vorliegenden Erfindung ist in Figur 6 dargestellt. Insbesondere zeigt Figur 6 eine andere Art der Trageeinheit 7, die hier mit der Bezugsziffer 13 versehen ist.

Ausgehend vom Verriegelungsbolzen 6 ist das Verbindungselement 8 um jeweils 90° nach außen abgebogen und liegt mit den abgebogenen U-Schenkeln 13.1 auf der positiven Stützstufe 2.1 des Trägers 2 auf. Die U-Schenkel 13.1 dieser Trageeinheit 13 bilden damit gleichzeitig die negative Stützstufe, die mit der positiven Stützstufe 2.1 korrespondiert.

Entsprechend der vorgegebenen bzw. gewünschten Breite der Tragfläche 18 des wiederum flachen Gepäckträgers sind die U-Schenkel 13.1 nochmals umgebogen und verlaufen im Endbereich wieder parallel zur Längsachse des Trägers 2. Die Enden der U-Schenkel 13.1 sind in seitliche Aufnahmetaschen 19 der Tragfläche 18 eingesetzt. Die Tragfläche kann aus Kunststoff, Metall oder Leinen oder dergleichen sein. Aus dem gleichen Material sind die Aufnahmetaschen 19 gebildet, die vorzugsweise am hinteren Ende verschlossen sind. Die U-Schenkel können zur Aufnahme von Tragetaschen, Rucksäcke oder dergleichen benutzt werden.

Durch die Stützstufen 2.1 und 7.1 bzw. 13.1 im Träger 2 und an der Trageeinheit 7 bzw. 13 wird eine optimale Lastabstützung zwischen dem Träger 2 und der Trageeinheit 7 bzw. 13 erzielt.

Anhand der Figuren 7 bis 10 wird nachfolgend ein drittes Ausführungsbeispiel einer erfindungsgemäßen Gepäckhalterung beschrieben. Figur 7 zeigt in vereinfachter Darstellung den Sattel 15 und die den Sattel 15 des Fahrrades tragende Sattelstütze 1, die in üblicher Bauweise schräg verläuft und in dem Rahmen des Fahrrades höhenverstellbar befestigt ist. An der Sattelstütze 1 ist ein Träger 2 durch einen Schnell- oder Spannverschluß 17 befestigt. Der Träger 2 ist kastenförmig ausgebildet und besitzt im Querschnitt im wesentlichen eine Dreiecksform. Der Träger 2 ist von der Rückseite zumindest teilweise offen. Er kann verschlossen werden und einen Raum zur Unterbringung von Reparatursets oder dergleichen bilden.

Der Träger 2 ist im vorderen Bereich dergestalt abgebogen, daß der Verschluß 17 mit der Sattelstütze 1 rechtwinklig verläuft, während das nach hinten ragende Trägerteil horizontal bzw. parallel zur Fahrbahn und damit im wesentlichen parallel zur oberen Satteldecke ausgerichtet ist.

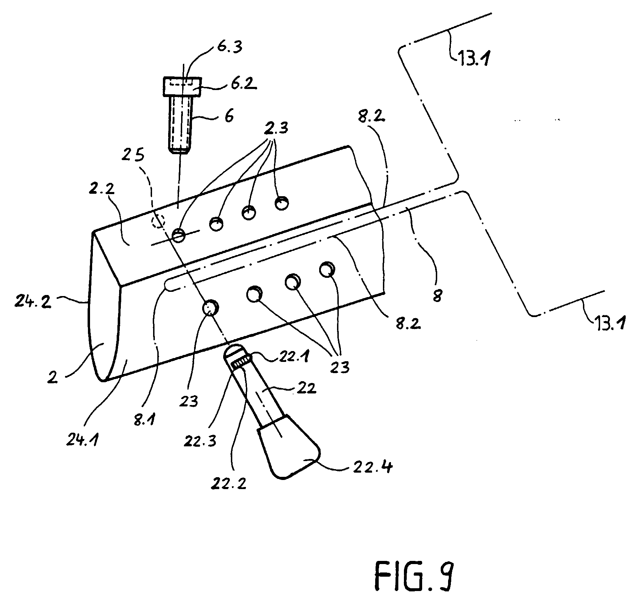

In die Oberseite 2.2 des Trägers 2 ist zumindest eine Bohrung oder Öffnung 2.3 eingebracht (siehe insbesondere Figuren 8 und 9), in die ein Bolzen oder Stift 6 eingesetzt ist. In dem gezeigten Beispiel nach den Figuren 7 und 8 ist der Bolzen oder Stift 6 als Gewindebolzen ausgebildet, der in die als Gewindebohrung ausgeführte Bohrung 2.3 eingeschraubt ist. Der Gewindebolzen 6 besitzt einen Schraubenkopf 6.2 mit einem Innensechskant 6.3. Anstelle des geschilderten und gezeichneten Gewindebolzens mit Kopf und Innensechskant sind hier selbstverständlich auch andere geeignete Befestigungsmittel möglich. Beispielhaft seien erwähnt: Bolzen mit seitlich eingesetzter Rastkugel, Bolzen mit Splint, Gewindebolzen mit endseitig aufgeschraubter Gewindemutter, Bolzenkopf mit Außenschlüssel und dergleichen mehr.

Ferner ist bereits an dieser Stelle darauf hinzuweisen, daß an der Oberseite 2.2 des Trägers 2 auch mehrere Bohrungen oder Öffnungen 2.3 in Reihe angeordnet sein können. Dadurch ist eine einfache Längsverschiebung des Verbindungselementes 8 möglich, was der Aufnahme unterschiedlicher Gepäckstücke 21 entgegenkommt.

Das Verbindungselement 8 ist mit der Trageeinheit 13 verbunden, die der Aufnahme und Halterung von Gepäckbehältnissen 21 dient. Das Verbindungselement 8 und die Trageeinheit 13 sind gabelförmig gestaltet und bestehen regelmäßig aus einem Stück. Die beiden im größeren seitlichen Abstand zueinander angeordneten freien Schenkel 13.1 der Trageeinheit 13 verlaufen parallel und nehmen das Gepäckbehältnis 21 in Laschen oder Schlaufen 19 auf, die jeweils seitlich am Gepäckstück 21 fest angebracht sind.

In Richtung zur Sattelstütze 1 besteht das Verbindungselement 8 aus zwei enger zueinander angeordneten parallelen Schenkeln 8.2, die vorne in einem einstückigen Bogenteil 8.1 miteinander verbunden sind. Statt dieser zwei parallelen Schenkel 8.2 ist es auch denkbar, nur eine Stange oder einen Stab vorzusehen, der am vorderen Stirnende eine Schlaufe, einen Ring oder ein sonstiges Formschlußelement 8.1 aufweist. Mit dem Bogenteil oder Formschlußelement 8.1 umgreift das Verbindungselement 8 im rechten Winkel den ersten Bolzen oder Stift 6, der von der Oberseite 2.2 des Trägers 2 in den Innenraum des Trägers 2 frei hineinragt.

Die endgültige und sichere Halterung des Verbindungselementes 8 im Träger 2 wird durch den zweiten Bolzen oder Stift 22 bewirkt, der durch eine Bohrung oder Öffnung 23 in der Seitenwand 24.1 des Trägers 2 in den Innenraum des Trägers 2 hineinragt und unter dem Verbindungselement 8 und seitlich am ersten Bolzen oder Stift 6 anliegt oder nahezu anliegt. Der zweite Bolzen oder Stift 22 besitzt im vorderen freien Endbereich eine Rastkugel 22.1, die in einen Querkanal 22.2 des Bolzens 22 unter der Wirkung einer Feder 22.3 eingesetzt ist. Kopfseitig besitzt dieser zweite Bolzen oder Stift 22 einen Knebel 22.4 zur besseren und einfacheren Handhabung beim Einführen des Bolzens 22 in die Bohrung 23 gegen den Widerstand der unter Federdruck stehenden Rastkugel 22.1.

Der zweite Bolzen oder Stift 22 muß nicht zwingend in dieser Weise ausgebildet sein. Entscheidend und wesentlich ist es, daß der zweite Bolzen 22 sicher in den Träger 2 einführbar ist und ein unbeabsichtigtes Lösen verhindert wird. So kann der zweite Bolzen auch als Gewindebolzen ausgebildet sein, der in eine Gewindebohrung geschraubt oder durch eine Gewindemutter fest in Position gehalten wird. Statt des Knebels aus Metall, Kunststoff oder Gummi kann auch ein Ring oder eine Schlaufe aus beliebigem Werkstoff vorgesehen werden.

Der zweite Bolzen oder Stift 22 wird in die Bohrung oder Öffnung 23 auf der einen Seitenwand 24.1 des Trägers 2 eingeführt und durch die rückseitige, parallele Seitenwand 24.2 wieder aus einer entsprechenden korrespondierenden Bohrung oder Öffnung 25 herausgeführt. Die Rastkugel 22.1 (oder die Gewindemutter) kommt dadurch an der Außenseite der Seitenwand 24.2 zur Anlage und ist gegen unbeabsichtigtes Lösen gesichert. Ein solches unbeabsichtigtes Lösen darf auch nicht durch Rüttel- oder sonstige Fahrbewegungen erfolgen.

Die Bohrungen 23 in der Seitenwand 24.1 sind zu den Bohrungen 2.3 in der Oberseite 2.2 des Trägers 2 derart versetzt angeordnet, daß die Bolzen oder Stifte 6 und 22 sich kreuzend aneinander vorbeigeführt sind. In diesem Kreuzungsbereich wird dadurch das Verbindungselement 8 verriegelt. Es liegt fest und unverrückbar in der verriegelten Position und ist gegen unbeabsichtigtes Lösen einwandfrei gesichert. Dabei spielt auch eine Rolle, daß das Verbindungselement 8 durch eine obere rückseitige Öffnung 29 in den Träger 2 eingeführt ist und unter der Oberseite 2.2 anliegt und in dieser Position durch den zweiten Bolzen 22 gehalten wird.

Theoretisch kann der zweite Bolzen 22 in Längsrichtung vor oder hinter dem ersten Bolzen 6 liegen. Jedoch hat es sich als günstiger erwiesen, den zweiten Bolzen 22 in Fahrtrichtung hinter dem ersten Bolzen 6 anzuordnen. Die gewählte Anordnung der Bolzen 6 und 22 bestimmt die Lage der Bohrungen oder Öffnungen 2.3 und 23, 25.

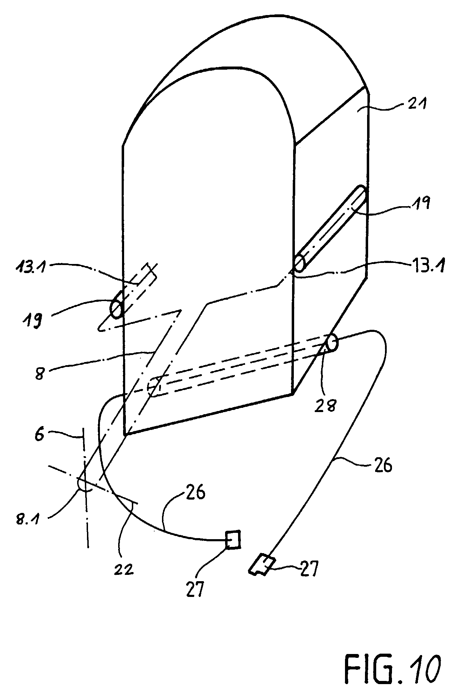

Aus Figur 10 ist noch ersichtlich, daß das Gepäckbehältnis auf der Bodenseite eine weitere Schlaufe oder Lasche 28 besitzen kann, die quer zum Verbindungselement 8 verläuft. In diese Lasche 28 ist ein elastisches Element 26 eingeführt, das an seinen freien Enden Verschlußstücke 27 aufweist. Mit diesen Verschlußstücken 27 ist das Gepäckbehältnis 21 auf dem Verbindungselement 8 durch Zugkraft angebunden. Die Verschlußstücke 27 werden am Fahrzeug oder Teilen des Fahrzeuges beispielsweise an Rahmenteilen, befestigt.

Es ist im Rahmen der Erfindung selbstverständlich auch möglich, die oben beschriebenen Ausführungsbeispiele miteinander zu kombinieren. Insbesondere kann das Verbindungselement 8 der Trageeinheit 7 des ersten Ausführungsbeispiels durch einen Verriegelungsmechanismus des dritten Ausführungsbeispiels an dem Träger 2 befestigt werden. Der Fachmann wird ohne weiteres weitere Kombinationsmöglichkeiten erkennen und realisieren können.

## Patentansprüche

1. Gepäckhalterung für Fahrzeuge, insbesondere für Fahrräder, mit einer Einrichtung zur lösbaren Befestigung einer Trageeinheit für Gepäckstücke, die in einem unter dem Fahrzeugsitz am Fahrzeug befestigbaren Träger einsetzbar ist,
dadurch gekennzeichnet,
daß der Träger (2) eine Verriegelungseinrichtung (4, 5, 6) aufweist, die ein in den Träger (2) rückseitig einsetzbares Verbindungselement (8) aufnimmt und verriegelt, welches mit der Trageeinheit (7; 13) verbunden ist, und daß der Träger (2) an seinem freien rückwärtigen Ende mit einer positiven Stützstufe (2.1) versehen ist, die mit einer zugewandten Stützstufe (7.1; 13.1) der Trageeinheit (7; 13) korrespondiert.

2. Gepäckhalterung nach Anspruch l,
dadurch gekennzeichnet,
daß die Verriegelungseinrichtung (4, 5, 6) aus einem unter der Kraft einer Feder (4) stehenden Verriegelungsbolzen (6) gebildet ist, der zum freien Stirnende verjüngt und in korrespondierende Öffnungen des Trägers (2) und der Feder (4) einsetzbar ist.

3. Gepäckhalterung nach Anspruch 2,
dadurch gekennzeichnet,
daß die Feder (4) als Blattfeder ausgebildet ist.

4. Gepäckhalterung nach einem der Ansprüche 1 bis 3,
dadurch gekennzeichnet,
daß das Verbindungselement (8) U-förmig gebildet ist und mit seinem Querschenkel (8.1) den Verriegelungsbolzen (6) umgreift, während zumindest ein freier U-Schenkel einen um 90° abgestuften Endzapfen (9) aufweist, der in eine Ausnehmung (9.1) der Trageeinheit (7) eingreift.

5. Gepäckhalterung nach einem der vorhergehenden Ansprüche,
dadurch gekennzeichnet,
daß das Verbindungselement (8) mit seinen rückwärtigen freien U-Schenkeln (13.1) als Rahmen von beliebiger geometrischer Grundfläche ausgebildet ist und so die Trageeinheit (13) bildet.

6. Gepäckhalterung nach Anspruch 5,
dadurch gekennzeichnet,
daß die abgebogenen freien U-Schenkel (13.1) des Verbindungselementes (8) auf der positiven Stützstufe (2. 1) des Trägers (2) aufliegen.

7. Gepäckhalterung für Fahrzeuge, insbesondere für Fahrräder, mit einer Einrichtung zur lösbaren Befestigung einer Aufnahmeeinheit für Gepäckstücke, die in einem unter dem Fahrzeugsitz am Fahrzeug befestigbaren Träger einsetzbar ist,
dadurch gekennzeichnet,
daß der Träger (2) mit einer Verriegelungseinrichtung (6, 22) für die rückseitig in den Träger (2) einsetzbare Aufnahmeeinheit (8, 13) versehen ist, die aus zwei sich unter einem Winkel kreuzende Bolzen, Stifte oder dergleichen (6, 22) gebildet ist, die im Träger (2) gehalten sind und zwischen sich im Kreuzungsbereich die Aufnahmeeinheit (8, 13) verriegelbar aufnehmen.

8. Gepäckhalterung nach Anspruch 7,
dadurch gekennzeichnet,
daß die die Aufnahmeeinheit (8, 13) aus einem Verbindungselement (8) und einer Trageeinheit (13) besteht, und daß das Verbindungselement (8) mit einem am freien vorderen Stirnende vorgesehenen Formschlußelement (8.1) den ersten Bolzen, Stift oder dergleichen (6) umgreift, während der zweite Bolzen, Stift oder dergleichen (22) das Verbindungselement (8) untergreift und im Formschluß mit dem ersten Bolzen, Stift oder dergleichen (6) hält.

9. Gepäckhalterung nach Anspruch 7 oder 8,
dadurch gekennzeichnet,
daß der Träger (2) kastenförmig ausgebildet ist und auf seiner Oberseite (2.2) zumindest eine Bohrung oder Öffnung (2.3) aufweist, in die der erste Bolzen, Stift oder dergleichen (6) feststellbar eingeführt ist.

10. Gepäckhalterung nach einem der Ansprüche 7 bis 9,
dadurch gekennzeichnet,
daß auf der Oberseite (2.2) des Trägers (2) in Reihe mehrere Bohrungen oder Öffnungen (2.3) vorgesehen sind.

11. Gepäckhalterung nach einem der Ansprüche 8 bis 10,
dadurch gekennzeichnet,
daß in zumindest einer Seitenwand (24.1, 24.2) des Trägers (2) zumindest eine Bohrung oder Öffnung (23, 25) vorgesehen ist, in die der zweite Bolzen, Stift oder dergleichen (22) feststellbar einführbar ist, welcher im wesentlichen rechtwinklig zum ersten Bolzen, Stift oder dergleichen (6) ausgerichtet ist und in Längsrichtung des Verbindungselements (8) vor oder hinter dem ersten Bolzen, Stift oder dergleichen (6) vorbeigeführt ist.

12. Gepäckhalterung nach Anspruch 11,
dadurch gekennzeichnet,
daß in der einen oder in beiden sich gegenüberliegenden parallelen Seitenwänden (24.1, 24.2) des Trägers (2) in Reihe mehrere Bohrungen oder Öffnungen (23, 25)vorgesehen sind, die zu den Bohrungen oder Öffnungen (2.3) in der Oberseite (2.2) des Trägers (2) in Längsrichtung des Verbindungselements (8) zumindest um die Dicke bzw. den Durchmesser des ersten Bolzens, Stiftes oder dergleichen (6) versetzt angeordnet sind.

13. Gepäckhalterung nach einem der Ansprüche 7 bis 12,
dadurch gekennzeichnet,
daß im vorderen Endbereich des zweiten Bolzens, Stiftes oder dergleichen (22) eine Rastkugel (22.1) radial und unter der Wirkung einer Feder (22.3) eingesetzt ist, die im montierten Zustand an der zweiten Seitenwand (24.1) des Trägers (2) außen zur Anlage kommt.

14. Gepäckhalterung nach einem der Ansprüche 7 bis 13,
dadurch gekennzeichnet,
daß die Trageeinheit (13) gabelförmig mit zwei seitlich beabstandeten freien Schenkeln (13.1) ausgebildet ist, die in seitlichen Laschen oder Schlaufen (19) eines Gepäckstückes (21) einführbar sind, während ein vorzugsweise elastisches Zugband (26) durch eine Lasche oder Schlaufe (28) an der Unterseite des Gepäckstückes (21) geführt und mit seinen freien Enden durch Verschlußstücke (27) am Fahrzeug bzw. Teilen des Fahrzeuges auf Zug befestigbar ist.
